# EUROPÄISCHE PATENTSCHRIFT

(11) **EP 1 815 159 B1**
(45) Veröffentlichungstag und Bekanntmachung des Hinweises auf die Patenterteilung: **21.10.2015**
(21) Anmeldenummer: 05814320.7
(22) Anmeldetag: 09.11.2005
(51) Int. Cl.: F16F 15/134

(54) **TORSIONSSCHWINGUNGSDÄMPFER**
TORSIONAL VIBRATION DAMPER
AMORTISSEUR DE VIBRATIONS DE TORSION

(30) Priorität: 20.11.2004 DE 102004056084
(43) Veröffentlichungstag der Anmeldung: 08.08.2007
(73) Patentinhaber: Schaeffler Technologies AG & Co. KG, 91074 Herzogenaurach (DE)
(72) Erfinder: SCHWEDERLE, Philippe, 67000 Strasbourg (FR); JÄCKEL, Johann, 77830 Bühlertal (DE); KOOY, Ad, 77886 Lauf (DE)
(86) Internationale Anmeldenummer: PCT/DE2005/002021
(87) Internationale Veröffentlichungsnummer: WO 2006/053525

(56) Entgegenhaltungen:
- EP-A- 1 566 566
- DE-A- 3 926 384
- DE-A1- 3 721 710
- US-A- 5 711 191

## Beschreibung

Die Erfindung betrifft einen Torsionsschwingungsdämpfer in Form eines Zweimassenschwungrades mit einem Eingangsteil, das drehfest mit der Antriebswelle einer Brennkraftmaschine verbindbar ist, und einem Ausgangsteil, das gegen den Widerstand einer ersten Energiespeichereinrichtung und einer zweiten Energiespeichereinrichtung, die parallel zu der ersten Energiespeichereinrichtung geschaltet ist, relativ zu dem Eingangsteil verdrehbar ist.

Derartige Torsionsschwingungsdämpfer, die beispielsweise aus der DE 39 26 384 A1 bekannt sind, sind zum Beispiel zwischen dem Antriebsmotor und das Getriebe eines Kraftfahrzeugs geschaltet. Je nach Betriebsart werden das eine Primärschwungmasse umfassende Eingangsteil und das das eine Sekundärschwungmasse umfassende Ausgangsteil um kleine oder große Winkel gegeneinander verdreht. Dabei können im Betrieb der Brennkraftmaschine Ungleichförmigkeiten auftreten, die das Eingangsteil zu Schwingungen anregen. Diese Schwingungen sollen nicht auf das Ausgangsteil übertragen werden, da sie in einem mit dem Ausgangsteil gekoppelten Getriebe zu Beschädigungen und zu einer unerwünschten Geräuschentwicklung führen könnten.

Aufgabe der Erfindung ist, einen Torsionsschwingungsdämpfer in Form eines geteilten Schwungrades, mit einem Eingangsteil, das drehfest mit der Antriebswelle einer Brennkraftmaschine verbindbar ist, und einem Ausgangsteil, das gegen den Widerstand einer ersten Energiespeichereinrichtung und einer zweiten Energiespeichereinrichtung, die parallel zu der ersten Energiespeichereinrichtung geschaltet ist, relativ zu dem Eingangsteil verdrehbar ist , so zu gestalten, dass im Betrieb der Brennkraftmaschine auftretende Ungleichförmigkeiten schwingungstechnisch isoliert werden, das heißt, nicht von dem Eingangsteil auf das Ausgangsteil übertragen werden.

Die Aufgabe ist bei einem Torsionsschwingungsdämpfer in Form eines geteilten Schwungrades, mit einem Eingangsteil, das drehfest mit der Antriebswelle einer Brennkraftmaschine verbindbar ist, und einem Ausgangsteil, das gegen den Widerstand einer ersten Energiespeichereinrichtung und einer zweiten Energiespeichereinrichtung, die parallel zu der ersten Energiespeichereinrichtung geschaltet ist, relativ zu dem Eingangsteil verdrehbar ist, dadurch gelöst, dass die zweite Energiespeichereinrichtung mehrere Energiespeicherelemente umfasst, die an verschiedenen Stellen über den Umfang verteilt an das Ausgangsteil angelenkt sind, wobei das Ausgangsteil als flanschartiges Bauteil ausgebildet ist, das radial außen Ausleger aufweist, die sich radial zwischen den Endbereichen zweier benachbarter Energiespeicher der ersten Energiespeichereinrichtung erstrecken und radial innen über die zweite Energiespeichereinrichtung mit dem Eingangsteil des Torsionsschwingungsdämpfers koppelbar ist, wobei der Verdrehwinkel, bis zu dem die zweite Energiespeichereinrichtung ihre degressive Wirkung entfalten soll (Freiwinkel), 1 bis 10 Grad beträgt und die degressive Wirkung der zweiten Energiespeichereinrichtung so mit der Wirkung der ersten Energiespeichereinrichtung abgestimmt ist, dass die Wirkung der ersten Energiespeichereinrichtung im Freiwinkelbereich nahezu kompensiert wird. Dadurch wird die Verwendung von Druckfedern ermöglicht, die als Übertotpunktfedern zwischen dem Eingangsteil und dem Ausgangsteil wirken. Erfindungsgemäß ist sowohl an dem Eingangsteil als auch an dem Ausgangsteil jeweils eine Schwungmasse angebracht. Je nach Ausführung bilden auch das Eingangsteil und/oder das Ausgangsteil die Schwungmassen beziehungsweise einen Teil davon. Die beiden Schwungmassen, die zumindest teilweise durch das Eingangsteil und das Ausgangsteil gebildet werden, sind mit Hilfe von Lagereinrichtungen relativ zueinander verdrehbar gelagert. Die beiden Energiespeichereinrichtungen dienen dazu, im Betrieb der Brennkraftmaschine auftretende, oszillierende Schwingungen nicht auf das Ausgangsteil beziehungsweise die Sekundärschwungmasse zu übertragen, die drehfest mit einer Getriebeeingangswelle verbunden sein kann. Der Verdrehwinkel, bis zu dem die zweite Energiespeichereinrichtung ihre degressive Wirkung entfalten soll, wird auch als Freiwinkel bezeichnet, und beträgt 1 bis 10 Grad, insbesondere 5 bis 6 Grad. Die degressive Wirkung der zweiten Energiespeichereinrichtung ist so mit der Wirkung der ersten Energiespeichereinrichtung abgestimmt, dass die Wirkung der ersten Energiespeichereinrichtung im Freiwinkelbereich nahezu kompensiert wird.

Ein bevorzugtes Ausführungsbeispiel des Torsionsschwingungsdämpfers ist dadurch gekennzeichnet, dass die Energiespeicherelemente der zweiten Energiespeichereinrichtung jeweils mindestens eine Druckfeder, insbesondere eine Schraubendruckfeder, umfassen. Die Druckfeder dient dazu, das Eingangsteil und das Ausgangsteil durch Reibschluss miteinander zu koppeln, so lange ein begrenzter Verdrehwinkel zwischen dem Eingangsteil und dem Ausgangsteil nicht überschritten wird.

Ein weiteres bevorzugtes Ausführungsbeispiel des Torsionsschwingungsdämpfers ist dadurch gekennzeichnet, dass die Energiespeicherelemente der zweiten Energiespeichereinrichtung jeweils an Anlenkelement umfassen, das mit einem Ende an das Ausgangsteil eingelenkt ist. Das Anlenkelement kann, bezogen auf die Drehachse des Torsionsschwingungsdämpfers, radial innen oder radial außen an das Ausgangsteil angelenkt sein.

Ein weiteres bevorzugtes Ausführungsbeispiel des Torsionsschwingungsdämpfers ist dadurch gekennzeichnet, dass die Energiespeicherelemente jeweils ein Kopplungselement umfassen, das relativ zu dem Anlenkelement gegen die Kraft der Druckfeder verschiebbar ist. Vorzugsweise ist das Kopplungselement zwischen einem eingefahrenen Zustand, in dem das Ausgangsteil über das Kopplungselement durch Reibschluss mit dem Eingangsteil gekoppelt ist, und einem ausgefahrenen Zustand verschiebbar, in dem das Ausgangsteil nicht mit dem Eingangsteil gekoppelt ist.

Ein weiteres bevorzugtes Ausführungsbeispiel des Torsionsschwingungsdämpfers ist dadurch gekennzeichnet, dass radial innerhalb des Ausgangsteils eine Kopplungshülse angeordnet ist, die drehfest mit dem Eingangsteil verbunden ist. Die Kopplungshülse kann als separates Bauteil an dem Eingangsteil befestigt oder einstückig mit diesem ausgebildet sein.

Ein weiteres bevorzugtes Ausführungsbeispiel des Torsionsschwingungsdämpfers ist dadurch gekennzeichnet, dass das, bezogen auf die Drehachse des Torsionsschwingungsdämpfers, radial innere Ende des Kopplungselements durch die Druckfeder, in Abhängigkeit vom Verdrehwinkel des Eingangsteils relativ zu dem Ausgangsteil, unterschiedlich stark gegen die Kopplungshülse gedrückt wird. Vorzugsweise wird das Kopplungselement bei kleinen Verdrehwinkeln so stark gegen die Kopplungshülse gedrückt, dass zwischen dem Kopplungselement und der Kopplungshülse ein Reibschluss erzeugt wird.

Ein weiteres bevorzugtes Ausführungsbeispiel des Torsionsschwingungsdämpfers ist dadurch gekennzeichnet, dass das, bezogen auf die Drehachse des Torsionsschwingungsdämpfers, radial innere Ende des Kopplungselements in einer Aufnahme aufgenommen ist, die in einem Synchronring vorgesehen ist, der relativ zu der Kopplungshülse und dem Ausgangsteil verdrehbar ist. Durch den Synchronring werden alle Energiespeicherelemente gleichzeitig betätigt.

Ein weiteres bevorzugtes Ausführungsbeispiel des Torsionsschwingungsdämpfers ist dadurch gekennzeichnet, dass an dem Synchronring im Bereich der Aufnahme radial außen jeweils zwei Anschläge ausgebildet sind, durch die der Verdrehwinkel des Synchronrings relativ zu dem Ausgangsteil begrenzt wird. Durch die beiden Anschläge wird indirekt der Verschwenkwinkel der Anlenkelemente relativ zu dem Ausgangsteil begrenzt.

Ein weiteres bevorzugtes Ausführungsbeispiel des Torsionsschwingungsdämpfers ist dadurch gekennzeichnet, dass das, bezogen auf die Drehachse des Torsionsschwingungsdämpfers, radial innere Ende des Kopplungselementes an mindestens einen Klemmring angelenkt ist, der relativ zu dem Ausgangsteil begrenzt verdrehbar ist. Vorzugsweise ist in axialer Richtung zwischen zwei Klemmringen ein Schaltring angeordnet.

Ein weiteres bevorzugtes Ausführungsbeispiel des Torsionsschwingungsdämpfers ist dadurch gekennzeichnet, dass zwischen dem Klemmring und einem Laufring Freilaufelemente angeordnet sind, die mit Hilfe eines Schaltrings in Abhängigkeit vom Verdrehwinkel des Eingangsteils relativ zu dem Ausgangsteil zwischen dem Klemmring und dem Laufring einklemmbar sind. Der Laufring ist drehfest mit der Kopplungshülse verbunden. Der Laufring kann zum Beispiel durch eine Presspassung kraftschlüssig mit der Kopplungshülse verbunden sein.

Ein weiteres bevorzugtes Ausführungsbeispiel des Torsionsschwingungsdämpfers ist dadurch gekennzeichnet, dass die Freilaufelemente durch Federelemente vorgespannt sind, die sich an dem Klemmring abstützen. Durch die vorgespannten Freilaufelemente kann in beiden Drehrichtungen ein störungsfreier Betrieb des Torsionsschwingungsdämpfers gewährleistet werden.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: ein erstes Ausführungsbeispiel eines erfindungsgemäßen Torsionsschwingungsdämpfers im Längsschnitt;
- Figur 2: den Torsionsschwingungsdämpfer aus Figur 1 im Querschnitt;
- Figur 3: das Ausgangsteil des Torsionsschwingungsdämpfers aus den Figuren 1 und 2 im ausgelenkten Zustand;
- Fig. 4 bis 6: einen vergrößerten Ausschnitt aus Figur 3 in verschiedenen Zuständen;
- Figur 7: den Ausschnitt aus den Figuren 4 bis 6 gemäß einem weiteren Ausführungsbeispiel;
- Figur 8: ein zweites Ausführungsbeispiel des Torsionsschwingungsdämpfers im Längsschnitt;
- Figur 9: den Torsionsschwingungsdämpfer aus Figur 8 im Querschnitt im nicht ausgelenkten Zustand;
- Fig. 10: die gleiche Ansicht wie in Figur 9 im ausgelenkten Zustand;
- Fig. 11 bis 14: einen vergrößerten Ausschnitt aus Figur 10 in verschiedenen Zuständen;
- Fig. 15: ein weiteres Ausführungsbeispiel des Torsionsschwingungsdämpfers im Längsschnitt;
- Fig. 16: den Torsionsschwingungsdämpfer aus Figur 15 im Querschnitt;
- Fig. 17 bis 20: einen vergrößerten Ausschnitt aus Figur 16 in verschiedenen Zuständen;
- Fig. 21 bis 25: eine schematische Darstellung des in den Figuren 15 bis 20 dargestellten Torsionsschwingungsdämpfers in verschiedenen Zuständen;
- Fig. 26 bis 32: weitere Beispiele von Torsionsschwingungsdämpfern im Längs- und im Querschnitt und
- Fig. 33: ein kartesisches Koordinatensystem, in dem das Verdrehmoment eines erfindungsgemäßen Torsionsschwingungsdämpfers über dem Verdrehwinkel aufgetragen ist.

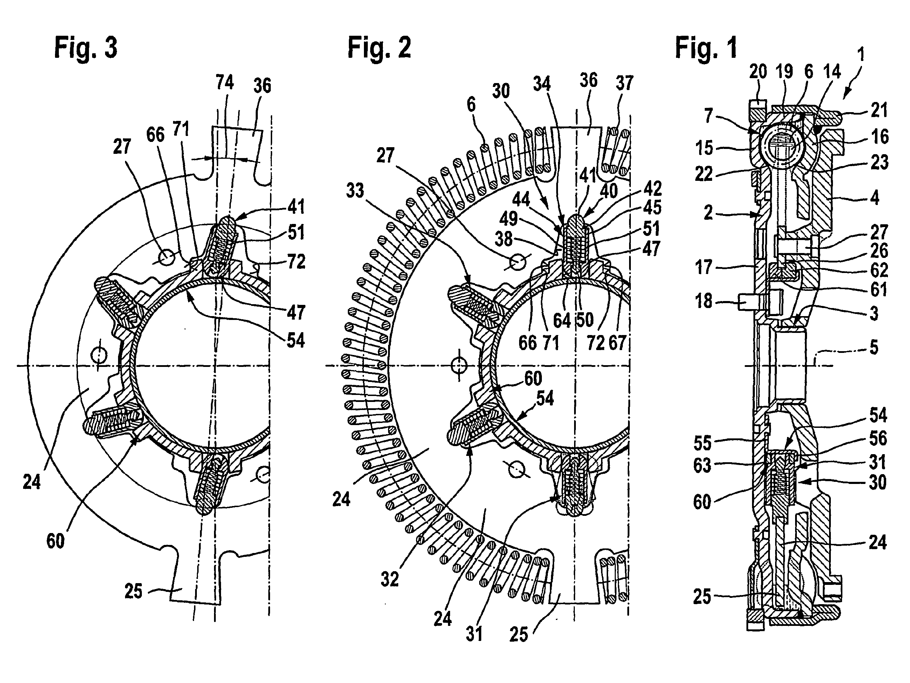

In den Figuren 1 und 2 ist ein Torsionsschwingungsdämpfer 1 im Längsschnitt und im Querschnitt dargestellt. Bei dem Torsionsschwingungsdämpfer 1, der auch als Drehschwingungsdämpfer bezeichnet wird, handelt es sich um ein Zweimassenschwungrad. Das Zweimassenschwungrad 1 umfasst eine an einer Kurbelwelle einer Brennkraftmaschine eines Kraftfahrzeugs befestigbare Primärschwungmasse oder Primärmasse 2, die auch als Eingangsteil 2 bezeichnet wird. An der Primärmasse 2 ist mittels eines Lagers 3, zum Beispiel eines Gleitlagers, eine Sekundärschwungmasse oder Sekundärmasse 4 koaxial und verdrehbar um eine Drehachse 5 gelagert. Die Sekundärschwungmasse 4 ist drehfest an einem (nicht dargestellten) Eingangsteil einer Kupplungseinrichtung befestigbar.

Die Primärmasse 2 ist mit der Sekundärmasse 4 über eine komprimierbare Energiespeicher 6 aufweisende Dämpfungseinrichtung 7, die auch als erste Energiespeichereinrichtung 7 bezeichnet wird, antriebsmäßig verbunden. Die Energiespeicher 6, hier in Form von in Umfangsrichtung länglichen Schraubenfedern mit großem Kompressionsweg, sind in einer Kammer 14 aufgenommen, die zumindest teilweise mit einem viskosen Medium gefüllt sein kann. Die Kammer 14 ist durch zwei aus Blech herstellbare Bauteile 15, 16 begrenzt, die zu der Primärschwungmasse 2 gehören. Das Bauteil 15 besitzt einen radial verlaufenden Bereich 17, der auch als Eingangsteil des Torsionsschwingungsdämpfers 1 bezeichnet wird und radial innen mittels Schrauben 18 mit der Kurbelwelle einer Brennkraftmaschine verbindbar ist. Radial außen geht das Bauteil 15 in einen axialen Ansatz 19 über, an dem das eine Trennwand bildende Bauteil 16 dicht befestigt ist. Das Bauteil 15 trägt radial außen einen Anlasserzahnkranz 20. Das Bauteil 16 trägt radial außen eine zusätzliche Schwungmasse 21.

Die Bauteile 15, 16 weisen Abstützbereiche 22, 23 für die Energiespeicher 6 auf. Durch ein ring- beziehungsweise flanschförmiges Bauteil 24 wird das Ausgangsteil der drehelastischen Dämpfungseinrichtung 7 gebildet, das radial außen Ausleger 25 aufweist, die sich radial zwischen den Endbereichen zweier benachbarter Energiespeicher 6 erstrecken. Bei einer Relatiwerdrehung zwischen dem Flanschteil 24, das auch als Ausgangsteil oder Flansch bezeichnet wird, und der Primärmasse 2 werden die Energiespeicher 6 zwischen den Auslegern 25 und den Abstützbereichen 22, 23 komprimiert.

Die radial inneren Bereiche 26 des Flansches 24 sind mittels Niete 27 mit der Sekundärmasse 4 fest verbunden. Radial innen ist das Ausgangsteil 24 des Torsionsschwingungsdämpfers 1 über eine zweite Energiespeichereinrichtung 30 mit dem Eingangsteil 17 des Torsionsschwingungsdämpfers 1 koppelbar. Die zweite Energiespeichereinrichtung 30 ist so gestaltet, dass sie nur bei kleinen Verdrehwinkeln, eine degressive Wirkung entfaltet. Die Wirkung der zweiten Energiespeichereinrichtung 30 ist so mit der Wirkung der ersten Energiespeichereinrichtung 7 abgestimmt, dass die Wirkung der ersten Energiespeichereinrichtung 7 durch die zweite Energiespeichereinrichtung 30 bei kleinen Verdrehwinkeln nahezu kompensiert wird.

In Figur 2 sieht man, dass die zweite Energiespeichereinrichtung 30 mehrere Energiespeicherelemente 31 bis 34 umfasst, die gleichmäßig über den Umfang des Ausgangsteils 24 des Torsionsschwingungsdämpfers 1 verteilt angeordnet sind. Außerdem sieht man in Figur 2, dass das Ausgangsteil 24 zwei diametral entgegengesetzt angeordnete Ausleger 25 und 36 aufweist, an denen die Enden von zwei Schraubendruckfedern 6, 37 angreifen. Die Energiespeicherelemente 31 bis 34 sind gleich aufgebaut. Im Folgenden wird der Aufbau der Energiespeicherelemente 31 bis 34 anhand des Energiespeicherelements 34 näher erläutert.

Das Energiespeicherelement 34 umfasst ein Anlenkelement 40 mit einem Kopf 41, der einen halbkreisförmigen Querschnitt aufweist. Mit dem Kopf 41 ist das Anlenkelement 40 radial innen an das Ausgangsteil 24 angelenkt. Im Anschluss an den Kopf 41 weist das Anlenkelement 40 einen Bund 42 auf, der dazu dient, das Anlenkelement 40 in einem Kopplungselement 44 hin und her bewegbar zu führen. Das Energiespeicherelement 34 ist in einer Ausnehmung 38 des Ausgangsteils 24 schwenkbar angeordnet. Das Kopplungselement 44 wird von einer Führungshülse 45 gebildet, in der der Bund 42 des Anlenkelements 40 geführt ist. Radial innen ist die Führungshülse 45 durch einen Fuß 47 abgeschlossen, der ein zentrales Durchgangsloch aufweist.

Von dem Bund 42 des Anlenkelements 40 erstreckt sich ein Federführungsdorn 49 radial nach innen. An dem freien Ende des Federführungsdorns 49 ist ein Anschlagelement 50 ausgebildet, das in die Durchgangsbohrung in den Fuß 47 ragt. Durch das Anschlagelement 50 wird die Bewegung des Kopplungselements 44 relativ zu dem Anlenkelement 40 radial nach innen begrenzt. Zu diesem Zweck ist in dem Durchgangsloch in dem Fuß 47 eine Rastkante ausgebildet, die an dem Anschlagelement 50 anliegt. Zwischen dem Federführungsdorn 49 und der Führungshülse 45 ist ein Ringraum ausgebildet, in dem eine Schraubendruckfeder 51 angeordnet ist. Die Schraubendruckfeder 51 ist zwischen dem Bund 42 des Anlenkelements 40 und dem Fuß 47 des Kopplungselements 44 eingespannt. Durch die Vorspannkraft der Schraubendruckfeder 51 wird der Fuß 47 des Kopplungselements 44 in Anlage an dem Anschlagelement 50 des Anlenkelements 40 gehalten.

Der Fuß 47 des Kopplungselements 44 befindet sich in Kontakt mit einer Kopplungshülse 54, die im Wesentlichen die Gestalt eines Kreiszylindermantels aufweist. In Figur 1 sieht man, dass sich von der Kopplungshülse 54 ein Befestigungsflansch 55 radial nach innen erstreckt. Mit dem Befestigungsflansch 55 ist die Kopplungshülse 54 an dem Eingangsteil 17 des Drehschwingungsdämpfers 1 befestigt. An dem anderen Ende der Kopplungshülse 54 erstreckt sich ein Anschlagring 56 radial nach außen. In axialer Richtung zwischen dem Anschlagring 56 und dem Eingangsteil 17 des Torsionsschwingungsdämpfers 1 ist ein Synchronring 60 angeordnet, der zwei symmetrisch ausgebildete Synchronringhälften 61, 62 umfasst. Der Synchronring 60 wird durch eine vorgespannte Tellerfeder 63 in Anlage an dem Anschlagring 56 gehalten.

Der Synchronring 60 weist eine Aufnahmebohrung 64 auf, in der der Fuß 47 Kopplungselements 44 aufgenommen ist. Im Bereich des Energiespeicherelements 34 sind außerhalb der Aufnahmebohrung 64 an dem Synchronring 60 zwei Anschlagflächen 66, 67 ausgebildet, die von entsprechenden Gegenflächen 71, 72 beabstandet sind, die an dem Ausgangsteil 24 des Torsionsschwingungsdämpfers 1 ausgebildet sind.

In Figur 3 ist das Ausgangsteil 24 in einer um einen Winkel 74 verdrehten Stellung dargestellt. Der Synchronring 60 nimmt die gleiche Stellung ein wie in Figur 2. Die Gegenfläche 71 des Ausgangsteils 24 befindet sich in Anlage an der Anschlagfläche 66 des Synchronrings 60.

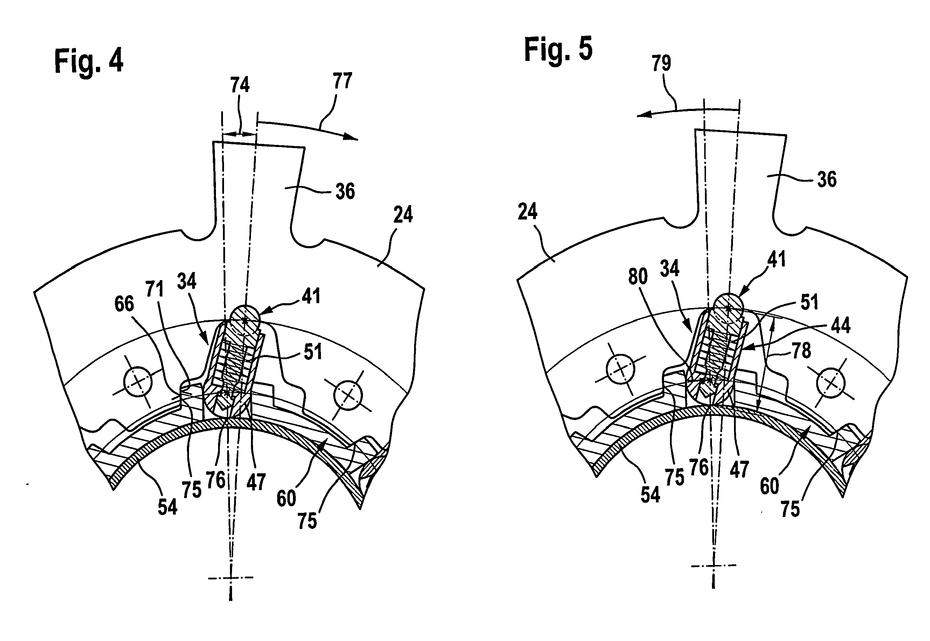

Bei der Schraubendruckfeder 51 handelt es sich um eine inverse Feder, die über das Anlenkelement 40 radial innen an das Ausgangsteil 24 angelenkt ist. Der Fuß 47 des Kopplungselements 44 wird, je nach Verdrehwinkel des Ausgangsteils 24 gegen die äußere Umfangsfläche der Kopplungshülse 54 gedrückt, die eine Laufbahn für den Fuß 47 des Kopplungselements 44 bildet. Der Synchronring 60 ist durch die Tellerfeder 63 leicht vorgespannt. Der Synchronring dient zum einen dazu, dass alle Energiespeicherelemente 31 bis 34 gleichzeitig betätigt werden. Gleichzeitig erzeugt die Tellerfeder 63 eine Umfangskraft, welche die inverse Schraubendruckfeder 51 in Funktion bringt, wie im Folgenden, insbesondere anhand des Zustands in Figur 5, näher erläutert wird. Darüber hinaus entfaltet der Synchronring 60 bei großen Schwenkwinkeln oder Schwingwinkeln die Funktion einer Reibsteuerscheibe.

In Figur 4 ist der Zustand des Energiespeicherelements 34 bei großen Verdrehwinkeln 74 dargestellt. Bei großen Verdrehwinkeln 74 ist die inverse Feder 51 außer Betrieb. Zwischen dem Fuß 47 und der Kopplungshülse 54 ist an einem Punkt 76 Spiel vorhanden. An den Punkten 75 liegt das Ausgangsteil 24 an dem Synchronring 60 an. Das Ausgangsteil 24 betätigt den Synchronring 60. Das heißt, der Synchronring 60 dreht sich zusammen mit dem Ausgangsteil 24. Der Synchronring 60 übernimmt gegebenenfalls die Funktion einer Reibsteuerscheibe. Durch einen Pfeil 77 ist die Verdrehrichtung des Ausgangsteils 24 angedeutet.

In Figur 5 ist dargestellt, was passiert, wenn das Ausgangsteil 24 in Richtung eines Pfeils 79 in der entgegengesetzten Richtung verdreht wird. Die Schraubendruckfeder 51 entfaltet ihre Funktion, das heißt sie wird zusammengedrückt. Dabei verkleinert sich eine Länge 78. Dadurch entsteht eine Reaktionskraft zwischen der Schraubendruckfeder 51, die über den Fuß 47 des Kopplungselements 44 auf die von der Kopplungshülse 54 gebildete Laufbahn übertragen wird. Durch die in axialer Richtung wirkende Vorspannkraft der Tellerfeder 63 (siehe Figur 1) wird eine Umfangskraft 80 erzeugt, die von dem Synchronring 60 auf das Kopplungselement 44 wirkt. Dadurch wird sichergestellt, dass der Fuß 47 nicht auf der Kopplungshülse 54 durchrutscht. Der Fuß 47 des Kopplungselements 44 haftet an dem Kontaktpunkt 76. Ab diesem Punkt ist die Funktion der inversen Feder 51 gewährleistet. An den Punkten 75 ist ein Spiel zwischen dem Ausgangsteil 24 und dem Synchronring 60 vorhanden.

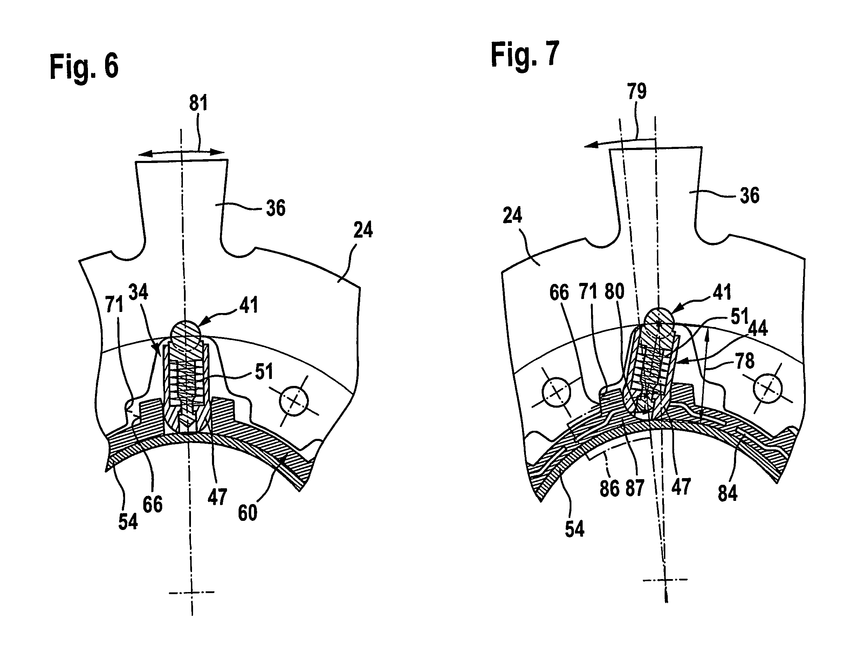

In Figur 6 ist ein Zustand dargestellt, in dem die inverse Feder 51 ihre Funktion entfaltet. Das Ausgangsteil 24 schwingt mit seinem Ausleger 36 um den neutralen Punkt, wie durch einen Doppelpfeil 81 angedeutet ist. Der Schwingwinkel ist vorzugsweise kleiner als 10 Grad.

In Figur 7 ist eine ähnliche Darstellung wie in Figur 5 mit einem alternativ gestalteten Synchronring 85 dargestellt. Der Synchronring 85 ist mit Schlitzen versehen, so dass in einem Bereich 86 eine Zunge 87 gebildet wird, deren Ende an den Fuß 47 des Kopplungselements 44 angepasst ist. Von der inversen Feder 51 wird über den Fuß 47 eine Kraft auf die Zunge 87 aufgebracht. Dabei legt sich die Zunge 87 flächig an die Kopplungshülse 54 an. Dadurch wird der Kontakt zwischen dem Fuß 47 des Kopplungselements 44 und der Kopplungshülse 54 verstärkt.

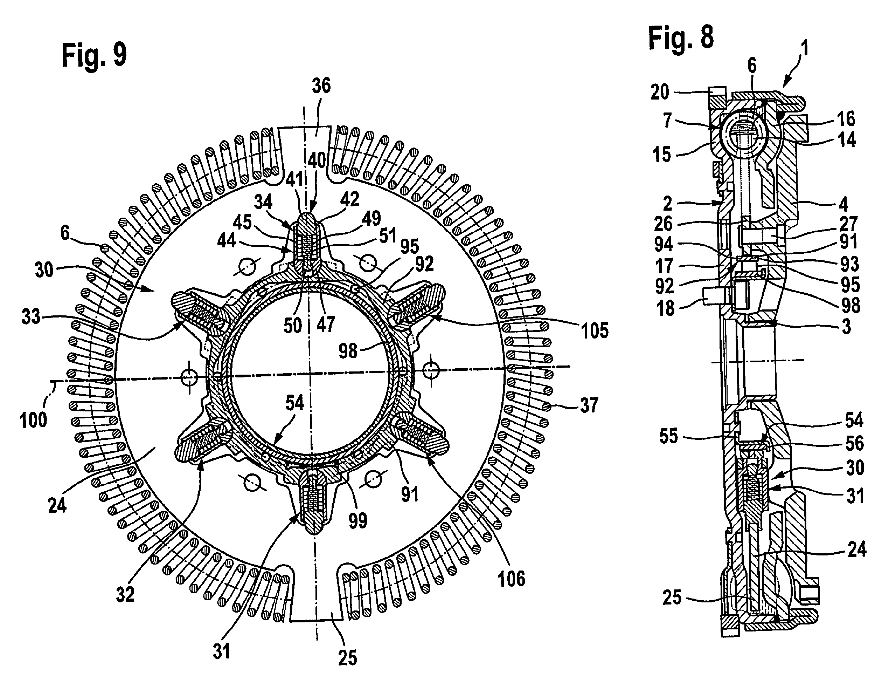

In den Figuren 8 und 9 ist ein ähnlicher Torsionsschwingungsdämpfer 1 wie in den Figuren 1 und 2 dargestellt. Zur Bezeichnung gleicher Teile werden die gleichen Bezugszeichen verwendet. Um Wiederholungen zu vermeiden, wird auf die vorangegangene Beschreibung der Figuren 1 und 2 verwiesen. Im Folgenden wird nur auf die Unterschiede zwischen den beiden Ausführungsbeispielen eingegangen.

Bei dem in den Figuren 8 und 9 dargestellten Ausführungsbeispiel sieht man, dass insgesamt sechs Energiespeicherelemente 31 bis 34, 105, 106 gleichmäßig verteilt über den Umfang des Ausgangsteils 24 an dieses angelenkt sind. Die Energiespeicherelemente sind, bezogen auf das Ausgangsteil 24, radial innen an ein Schaltelement 91 und einen Klemmring 92 angelenkt. In Figur 8 ist das Schaltelement 91 in der Mitte zwischen zwei symmetrisch zu dem Schaltelement 91 gestalteten Klemmringhälften 93 und 94 angeordnet. In radialer Richtung ist zwischen dem Schaltelement 91 sowie dem Klemmring 92 und der Kopplungshülse 54 eine Rolle 95 angeordnet. Die Rolle 95 befindet sich in Rollkontakt mit einem Innenring 98, der mit Hilfe einer Presspassung haftschlüssig mit der Kopplungshülse 54 verbunden ist.

Der Innenring 98 bildet einen Laufring für die Rolle 95. Zwischen zwei Energiespeicherelementen 34, 105 ist jeweils eine Rolle 95 angeordnet. Demzufolge umfasst die zweite Energiespeichereinrichtung 30 sechs Energiespeicherelemente und sechs Rollen 95. Die Rollen 95 bilden zusammen mit dem Innenring 98, dem Klemmring 92, dem Schaltelement 91 und einem Federelement 99, das zwischen dem Schaltelement 91 und dem Innenring 98 angeordnet ist, einen Freilauf in zwei Richtungen. Das Federelement erzeugt eine bestimmte Hysterese zwischen dem Schaltelement 91 und dem Innenring 98. Das Schaltelement 91 ist mit einer Außenverzahnung ausgestattet, die einen bestimmten Freiwinkel zu einer Innenverzahnung aufweist, die radial innen an dem Ausgangsteil 24 ausgebildet ist. Durch die erfindungsgemäße Ausbildung und Anordnung der zweiten Energiespeichereinrichtung 30 und die Reibwertunabhängigkeit können beliebige Kennlinien erzeugt werden. Die Schraubendruckfedern 51 sind auch in ihren Extremlagen noch vorgespannt.

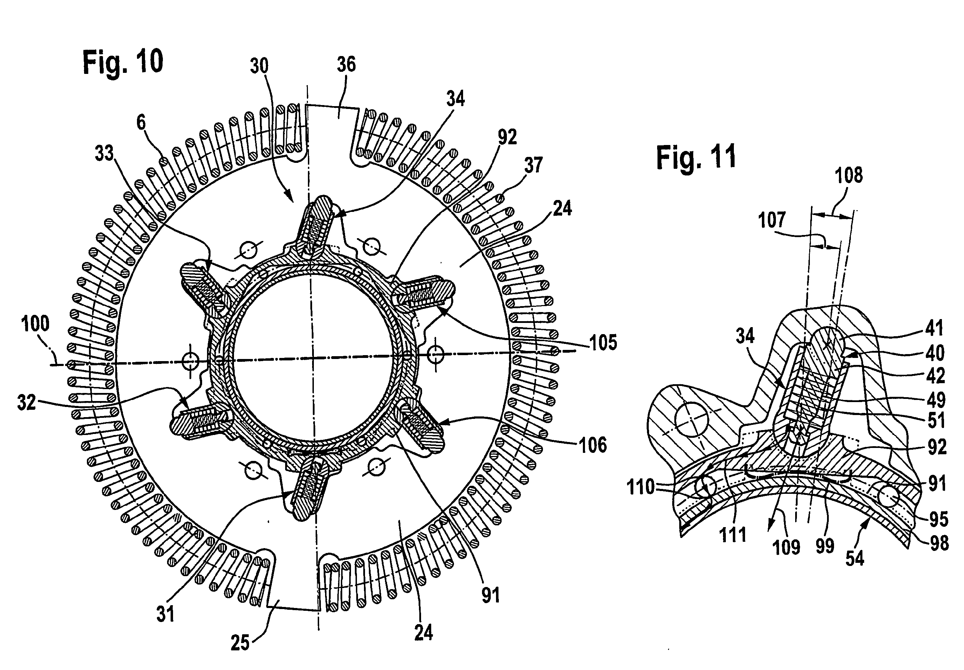

In Figur 10 ist die Energiespeichereinrichtung 30 im ausgelenkten Zustand des Ausgangsteils 24 dargestellt. In den Figuren 9 und 10 sind zwei Halbschnitte durch eine Trennlinie 100 getrennt. Im oberen Halbschnitt ist der Klemmring 92 im Schnitt dargestellt. Im unteren Halbschnitt ist das Schaltelement 91 im Schnitt dargestellt.

In Figur 11 ist ein Zustand des Energiespeicherelements 34 dargestellt, in dem die inverse Feder 51 ihre Funktion ausübt. Das Ausgangsteil 24 schwingt um Verdrehwinkel 107, die kleiner als ein maximaler Verdrehwinkel 108 sind. Von der Feder 51 wird eine Kraft 109 erzeugt, die dafür sorgt, dass das System an den Kontaktstellen zwischen Klemmring 92, Rollen 95 und Innenring 98 blockiert. An einem Punkt 110 bleibt die Klemmung so lange aufrechterhalten, wie die Kraftrichtung beibehalten wird. Der Kraftfluss ist durch eine Pfeile 111 angedeutet. Das gestrichelt angedeutete Schaltelement 91 ist außer Betrieb und steht unter Reibung mit dem Innenring 98. Das Federelement 99 hat in dem in Figur 11 dargestellten Zustand keine Funktion. Durch die Veränderung des wirksamen Hebelarms wird eine negative Federkennlinie erzeugt.

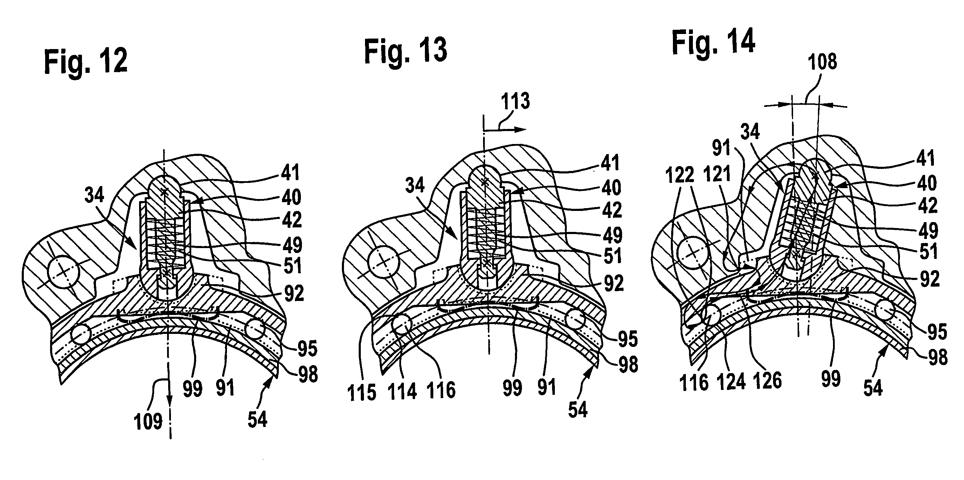

In Figur 12 ist das Energiespeicherelement 34 beim Nulldurchgang dargestellt. Beim Nulldurchgang handelt es sich um einen instabilen Zustand. In diesem Zustand sind keine Umfangskräfte vorhanden. Außer der Fliehkraft wirken keine Kräfte auf die Rollen 95. Die Rollen 95 legen sich an den Klemmring 93 an. Zwischen den Rollen 95 und dem Innenring 98 ergibt sich ein Spiel. Das Schaltelement 91 ist außer Betrieb und steht unter Reibung mit dem Innenring 98. Das Federelement 99 hat in diesem Zustand keine Funktion.

In Figur 13 ist der Übergang vom Nulldurchgang in den in Figur 11 dargestellten Zustand des Energiespeicherelements 34 dargestellt. Das Ausgangsteil 24 bewegt sich in Richtung eines Pfeils 113. Es entsteht eine Umfangskraft auf den Klemmring 92 in entgegengesetzter Richtung zu dem Pfeil 113. Die Rolle 95 liegt aufgrund der wirkenden Fliehkraft nicht an dem Innenring 98 an. Der Klemmring 93 könnte durchrutschen. Das Schaltelement 91 steht unter Reibung. Die Rolle 116 kommt an den Punkten 114 und 115 mit dem Schaltelement 91 in Kontakt und verklemmt. Eine an dem Klemmring 92 ausgebildete Schräge kann mit dem Widerstand zwischen der Rolle 116 und dem Schaltelement 91 die Rolle auf den Innenring 98 drücken. Sobald es zum Kontakt zwischen der Rolle 116 und dem Innenring 98, der auch als Laufring bezeichnet wird, kommt, ist der in Figur 11 dargestellte Zustand der Hemmung erreicht.

In Figur 14 ist ein so genannter Betriebspunktverschiebungszustand dargestellt, in dem die inverse Feder 51 nicht in Funktion ist. In diesem Zustand wird das Energiespeicherelement 34 zusammen mit dem Ausgangsteil 24 relativ zu der Kopplungshülse 54 verdreht. An einem Punkt 121 befindet sich das Ausgangsteil 24 mit dem Schaltelement 91 in Kontakt. Außerdem hat das Schaltelement 91 an den Punkten 122 Kontakt zu der Rolle 116. Der Kraftfluss ist durch Pfeile 126 angedeutet. Der Kraftfluss 126 geht nicht mehr über den Innenring 98. Das komplette Aggregat gleitet auf dem Innenring 98. Es wirkt nur noch die Hysterese von dem Federelement 99. An einem Punkt 124 gleitet die Rolle 116 auf dem Innenring 98.

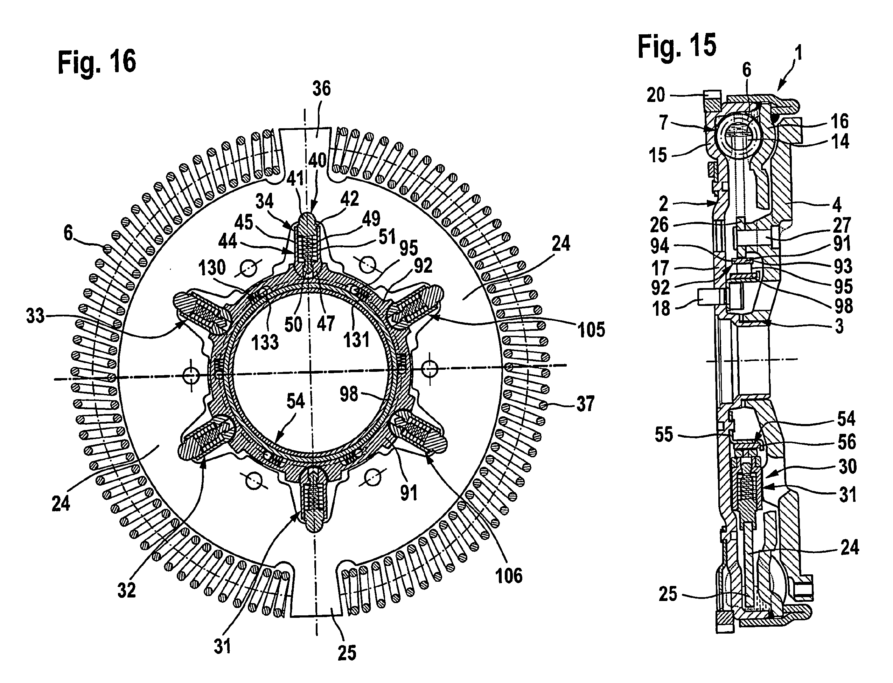

In den Figuren 15 und 16 sind ähnliche Drehschwingungsdämpfer 1 wie in den Figuren 1,2 und 8, 9 dargestellt. Zur Bezeichnung gleicher Teile werden die gleichen Bezugszeichen verwendet. Um Wiederholungen zu vermeiden, wird auf die vorangegangene Beschreibung der Figuren 1, 2 und 8, 9 verwiesen. Im Folgenden wird nur auf die Unterschiede zwischen den einzelnen Ausführungsbeispielen eingegangen.

Bei dem in den Figuren 15 und 16 dargestellten Torsionsschwingungsdämpfer 1 entfallen gegenüber dem in den Figuren 8 und 9 dargestellten Torsionsschwingungsdämpfer 1 die Federelemente 99. Zusätzlich zu dem in den Figuren 8 und 9 dargestellten Ausführungsbeispiel werden die Rollen 95, 133 bei dem in den Figuren 15 und 16 dargestellten Ausführungsbeispiel durch Federelemente 130, 131 an den Klemmring 92 angelegt. Das in den Figuren 15 und 16 dargestellte System ist symmetrisch aufgebaut und funktioniert gleich beziehungsweise ähnlich in beiden Drehrichtungen.

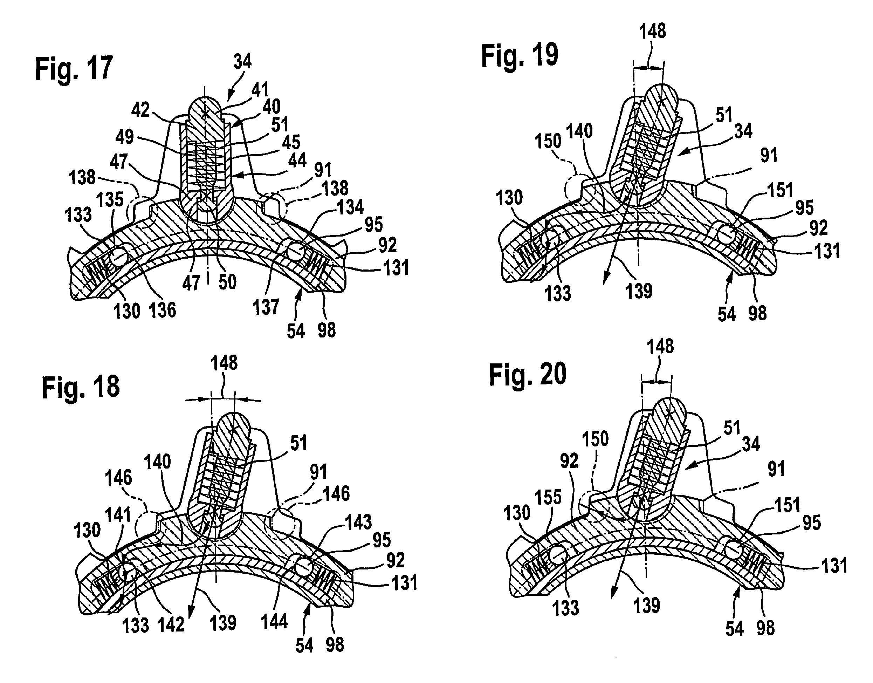

In Figur 17 ist der Zustand des Nulldurchgangs des Energiespeicherelements 34 dargestellt. In diesem Zustand wirken keine Umfangskräfte. Die Federelemente 130, 131 drücken die Rollen 133, 95 gegen den Klemmring 92. Die Federn 130, 131 und die Rollen 133, 95 sind symmetrisch angeordnet. Dadurch kann eine Verklemmung in beiden Richtungen stattfinden, sobald entsprechende Umfangskräfte vorhanden sind. Ebenso wird durch das erfindungsgemäße System eine Sperre in beiden Richtungen ermöglicht. Bei dem in Figur 17 dargestellten Zustand des Nulldurchgangs hat das Schaltelement 91 keine Funktion. Die Rollen 133, 95 liegen an den Punkten 135, 134 an dem Klemmring 92 an. Zwischen den Rollen 133, 95 und dem Schaltelement 91 ist Spiel 136, 137 vorhanden. Das Schaltelement 91 hat in diesem Zustand keine Funktion. Das Ausgangsteil 24 liegt weder an dem Schaltelement 91 noch an dem Klemmring 92 an und hat somit auch keine Funktion, wie bei 138 zu sehen ist.

In Figur 18 ist der Zustand dargestellt, wenn sich die inverse Feder 51 in Funktion befindet. Die Auslenkung des Ausgangsteils 24 ist mit 148 bezeichnet und ist kleiner als 5° minus Delta. Durch die Kontaktstellen zwischen Klemmring 92/Rolle 133/Innenring 98/und die Form des Klemmrings 92 ist das System blockiert. Der zugehörige Kraftfluss ist durch Pfeile 140 angedeutet. Bei 141 ist angedeutet, dass die Rolle 133 klemmt. Bei 142 ist angedeutet, dass die Rolle 133 Spiel zu dem Schaltelement 91 hat. Bei 143 ist angedeutet, dass die Rolle 95 an dem Klemmring 92 anliegt. Bei 144 ist angedeutet, dass die Rolle 95 Spiel zu dem Schaltelement 91 hat. Aufgrund des Spiels mit den Rollen 133, 95 hat das Schaltelement 91 keine Funktion. Aufgrund des Spiels 146 zu dem Klemmring 92 und dem Schaltelement 91 findet auch keine Betätigung durch das Ausgangsteil 24 statt. Durch die Veränderung des Hebelarms wird eine negative Federkennlinie erzeugt. Bei einer Auslenkung 148 von 5° minus Delta liegt das Ausgangsteil 24 an dem Schaltelement 91 an. Der Winkel Delta kann beispielsweise in der Größenordnung von 0,2 bis 0,5° liegen, vorzugsweise 0,3° betragen.

In Figur 19 ist ein Zustand dargestellt, in dem sich die inverse Feder 51 in Funktion befindet und die rechte Rolle 95 abhebt. Die Auslenkung beziehungsweise der Verdrehwinkel 148 ist kleiner als 5 Grad und größer als 5 Grad minus delta. Die Funktion der linken Rolle 133 ist gegenüber dem in Figur 18 dargestellten Zustand unverändert. Die Rolle 133 klemmt. Der Kraftfluss, der durch Pfeile 140 angedeutet ist, ist identisch mit dem in Figur 18 dargestellten Zustand. Bei einer Auslenkung 148 von 5 Grad minus delta kontaktiert das Ausgangsteil 24 bei Punkt 150 das Schaltelement 91. Bei Punkt 151 hebt die rechte Rolle 95 von dem Klemmring 92 ab. Bei einer Auslenkung von 5 Grad kommt das Ausgangsteil in Kontakt mit dem Klemmring 92.

In Figur 20 ist der Zustand dargestellt, in dem die inverse Feder 51 beziehungsweise das Energiespeicherelement 34 bei einer so genannten Betriebspunktverschiebung verschoben wird. Das Ausgangsteil 24 kommt bei Punkt 150 in Kontakt mit dem Klemmring 92. Die linke Rolle 133 klemmt nicht, liegt bei Punkt 155 an und gleitet. Die rechte Rolle 95 ist von dem Schaltelement 91 abgehoben und klemmt ebenfalls nicht. In diesem Zustand ist die Freilauffunktion gewährleistet. Die linke Rolle 133 liegt unter der Federkraft der Feder 130 an dem Klemmring 92 an. Sobald das Ausgangsteil 24 zurückdreht, kann das System wieder Kraft übertragen. Die rechte Rolle 95 hat vor dem Nulldurchgang keine Funktion.

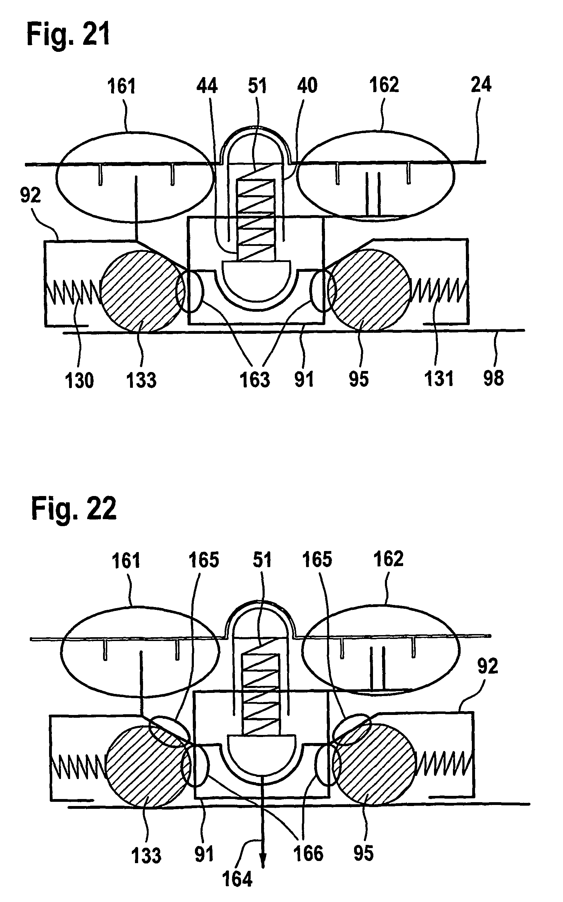

In den Figuren 21 bis 25 ist die Funktion des in den Figuren 15 bis 20 dargestellten Torsionsschwingungsdämpfers 1 mit inversen Federn und zweiseitigem Freilauf anhand eines Linearmodells schematisch dargestellt. Das Ausgangsteil, das auch als Sekundärflansch oder Flansch bezeichnet wird, ist mit 24 bezeichnet. Die inverse Feder ist mit 51 bezeichnet. Das Schaltelement ist mit 91 bezeichnet. Der Klemmring ist mit 92 bezeichnet. Der Innenring, der auch als Laufring bezeichnet wird, ist mit 98 bezeichnet. Die Rollen sind mit 95 und 133 bezeichnet. Das Anlenkelement ist mit 40 bezeichnet. Das Kopplungselement ist mit 44 bezeichnet. Die inverse Feder 51 ist vorgespannt.

In Figur 21 drücken die Federelemente 130, 133 die Rollen 133, 95 aufgrund der schrägen Gestaltung des Klemmrings 92 an die Oberfläche des Innenrings 98, die auch als Laufbahn oder Bahn bezeichnet wird. Bei Stelle 161 ist ein Freiwinkel zwischen dem Ausgangsteil 24 und dem Klemmelement 92 von ± 5 Grad angedeutet. Bei Stelle 162 ist ein Freiwinkel zwischen dem Ausgangsteil 24 und dem Schaltelement 91 von ± 5 Grad minus delta, zum Beispiel ± 4,7 Grad angedeutet. Bei Stelle 163 ist ein Spiel zwischen den Rollen 133, 95 und dem Schaltelement 91 angedeutet. Das in Figur 21 dargestellte System hat eine symmetrische Funktion. Die Funktion des dargestellten Systems wird in positiver Richtung erklärt, das heißt das Ausgangsteil 24 bewegt sich nach rechts.

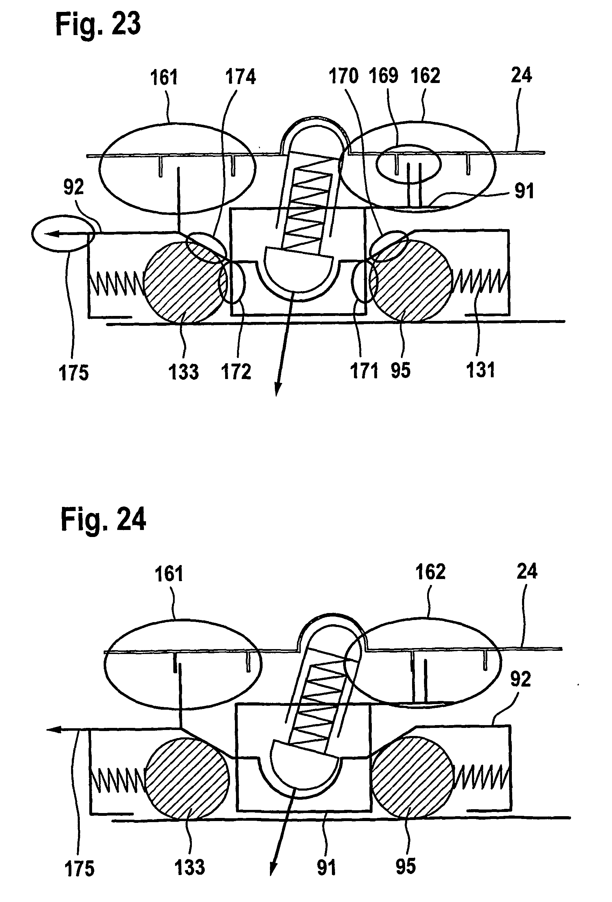

In Figur 22 tritt an den Stellen 161, 162 keine Funktion auf, da sich die beteiligten Bauteile im Freiwinkel befinden. Durch einen Pfeil 164 ist die von der inversen Feder 51 ausgeübte Kraft angedeutet. Bei Stelle 165 liegen beide Rollen 95, 133 an dem Klemmring 92 an und können klemmen, sobald eine Umfangskraft in einer von beiden Richtungen vorhanden ist. Bei Stelle 166 ist ein kleines Spiel zwischen den Rollen 95, 133 und dem Schaltelement 91 angedeutet. In Figur 23 beträgt der Auslenkwinkel des Ausgangsteils 24 zwischen 0 und 5 Grad minus delta. Bei Stelle 161 und Stelle 162 tritt im Freiwinkel keine Funktion auf. Bei Stelle 169 kann das Ausgangsteil 24 mit dem Schaltelement 91 in Kontakt kommen, wenn der Winkel der Auslenkung 5 Grad minus delta, also zum Beispiel 4,7 Grad, erreicht, und das Schaltelement 91 mit der rechten Rolle 95 in Kontakt kommt. Bei Stelle 170 liegt die Rolle 95 an dem Klemmring 92 an. Bei Stelle 171 ist ein kleines Spiel zwischen der Rolle 95 und dem Schaltelement 91 vorhanden. Ebenso ist bei Stelle 172 ein kleines Spiel zwischen der Rolle 133 und dem Schaltelement 91 vorhanden. Bei Stelle 174 ist die Rolle 133 an dem Klemmring 92 eingeklemmt. Durch einen Pfeil 175 ist eine Kraftübertragung an dieser Stelle und in dieser Richtung angedeutet.

In Figur 24 ist der Zustand dargestellt, in dem der Auslenkwinkel größer als 5 Grad minus delta, also etwa 4,7 Grad und kleiner als 5 Grad ist. Bei Stelle 161 ist angedeutet, dass im Freiwinkel keine Funktion stattfindet. Bei Stelle 162 ist angedeutet, dass aufgrund des Kontaktes eine Mitnahme des Schaltelements 91 erfolgt. Die linke Rolle 133 klemmt und es kommt zu einer Kraftübertragung wie durch den Pfeil 175 angedeutet ist. Die rechte Rolle 95 wird von dem Schaltelement 91 verschoben und liegt nicht mehr an dem Klemmring 92 an. Bei einem Auslenkwinkel von 5 Grad kommt das Ausgangsteil 24 mit dem Klemmring 92 in Kontakt und kann das gesamte System verschieben.

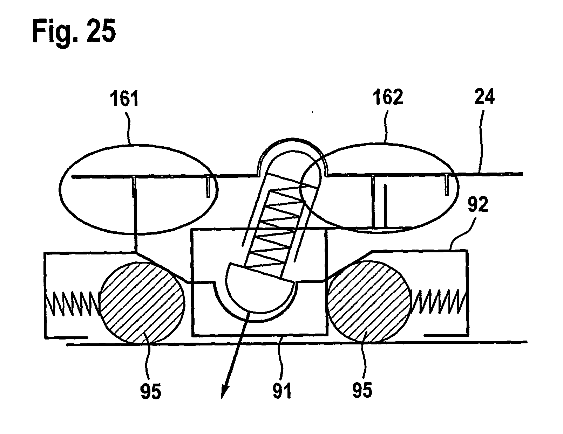

In Figur 25 ist der Zustand angedeutet, in dem der Auslenkwinkel größer als 5 Grad ist und eine Verschiebung des Systems erfolgt. Bei 161 ist angedeutet, dass aufgrund des Kontaktes zwischen dem Ausgangsteil 24 und dem Klemmring 92 eine Mitnahme erfolgt. Bei Stelle 162 ist angedeutet, dass aufgrund des Kontaktes zwischen dem Ausgangsteil 24 und dem Schaltelement 91 eine Mitnahme erfolgt. Das Ausgangsteil 24 verschiebt den Klemmring 92 nach rechts. Die rechte Rolle 95 kann aufgrund des Kontakts mit dem Schaltelement 91 nicht klemmen. Das System ist somit kraftfrei verschiebbar. Der Kraftfluss zwischen dem Ausgangsteil 24 und dem Klemmring 92 ist noch vorhanden. Sobald das Ausgangsteil zurückdreht, sich also nach links bewegt, kann die Rolle 95 klemmen und die Kraft übertragen. Durch das erfindungsgemäße System werden ein schnelles Ansprechen und geringe Wegverluste gewährleistet.

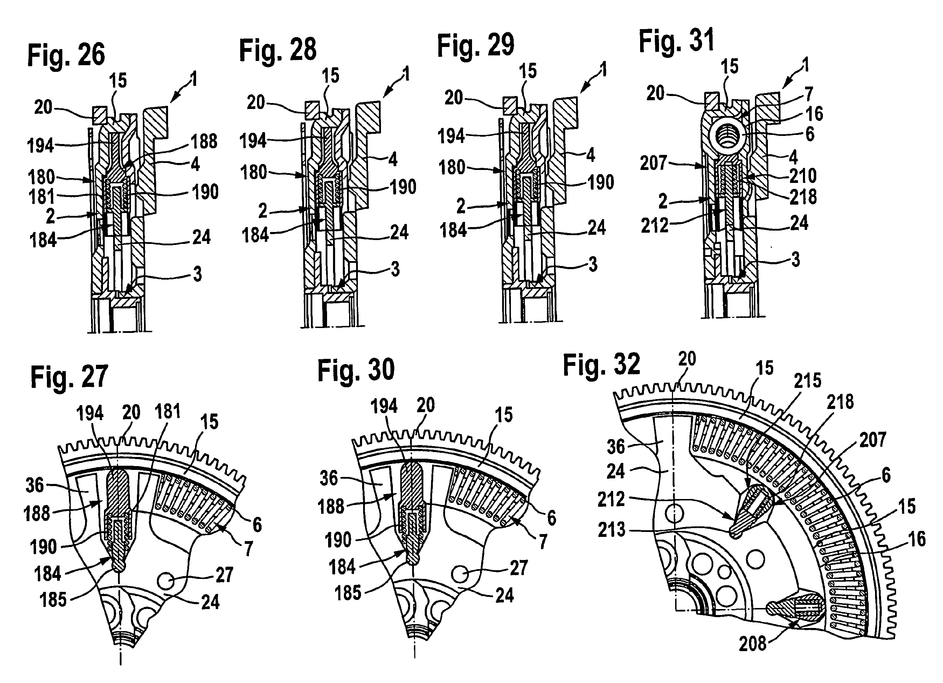

In den Figuren 26 bis 32 sind weitere Beispiele von Torsionsschwingungsdämpfern wie in den vorangegangenen Figuren dargestellt. Zur Bezeichnung gleicher Teile werden gleiche Bezugszeichen verwendet. Um Wiederholungen zu vermeiden, wird auf die vorangegangene Beschreibung der ähnlichen Ausführungsbeispiele verwiesen. Im Folgenden wird nur auf die Unterschiede zwischen den einzelnen Ausführungsbeispielen eingegangen.

Bei den in den Figuren 26 bis 30 dargestellten Beispielen ist eine zweite Energiespeichereinrichtung 180 zwischen das Ausgangsteil 24 und das durch die Primärschwungmasse gebildete Eingangsteil 2 des Torsionsschwingungsdämpfers 1 geschaltet. Die zweite Energiespeichereinrichtung 180 umfasst mehrere Energiespeicherelemente, von denen in den Figuren 26 bis 30 jeweils nur ein Energiespeicherelement 181 sichtbar ist. Das Energiespeicherelement 181 umfasst ein Anlenkelement 184, das einen Kopf 185 aufweist. Das Anlenkelement 184 ist mit dem Kopf 185 im Bereich des Auslegers 36 radial außen an das Ausgangsteil 24 angelenkt. Das freie Ende des Anlenkelements 184 ragt in ein Kopplungselement 188, das einen sich radial nach außen erstreckenden Arm 194 aufweist. In dem Kopplungselement 188 ist eine Schraubendruckfeder 190 angeordnet, die zwischen dem Kopplungselement 188 und dem Anlenkelement 184 vorgespannt ist. Das Kopplungselement 188 ist gegen die Vorspannkraft der Schraubendruckfeder 190 relativ zu dem Anlenkelement 184 bewegbar.

Die Schraubendruckfeder 190 wird wie bei den vorangegangenen Ausführungsbeispielen als Übertotpunktfeder eingesetzt, die in dem Kanal zwischen dem Ausgangsteil 24 und dem durch die Primärschwungmasse gebildeten Eingangsteil 2 wirkt. Für einen begrenzten Schwenkwinkel wirkt die Schraubendruckfeder 190 der Bogenfederkraft entgegen und setzt damit die effektive Federrate herab. Bei einem Überschreiten des maximalen Schwenkwinkels, der auch als Freiwinkel bezeichnet wird, wird die Druckfeder 190 soweit entspannt, dass der Kontakt zu der primären Schwungscheibe 2 verloren geht und damit der Betriebspunkt der Übertotpunktfeder 190 verstellt wird. Wenn sich die Bewegungsrichtung umkehrt, dann kuppelt die Übertotpunktfeder 190 fliehkraftgestützt wieder ein und kann wiederum der Bogenfeder entgegen wirken.

In Figur 28 ist angedeutet, dass der Kontaktbereich zwischen der Übertotpunktfeder 190 beziehungsweise dem Arm 194 des Kopplungselements 188 und der Primärschwungmasse 2 dachförmig ausgebildet sein kann, um die Reibung zu erhöhen. In den Figuren 29 und 30 ist angedeutet, dass der Kontaktbereich zwischen dem Arm 194 des Kopplungselements 188 und der Primärschwungmasse 2 auch mit einer Riffelung oder einer Verzahnung versehen sein kann.

In den Figuren 31 und 32 ist ein weiteres Beispiel dargestellt, bei dem eine zweite Energiespeichereinrichtung 210 zwischen die Primärschwungmasse 2 und das Ausgangsteil 24 geschaltet ist. Die zweite Energiespeichereinrichtung 210 umfasst mehrere Energiespeicherelemente 207, 208. Das Energiespeicherelement 207 umfasst ein Anlenkelement 212, das mit einem Kopf 213 radial außen an das Ausgangsteil 24 angelenkt ist. An dem Anlenkelement 212 ist ein Kopplungselement 215 gegen die Vorspannkraft einer Schraubendruckfeder 218 verschiebbar geführt. Das freie Ende des Kopplungselements 215 liegt an den Blechteilen 15, 16 der Primärschwungmasse 2 an.

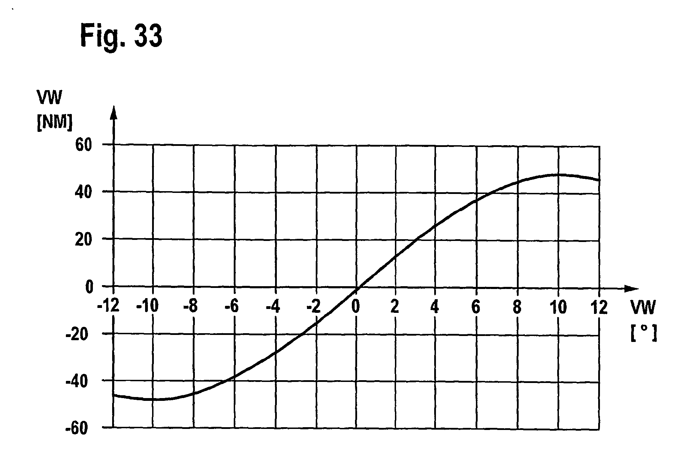

In Figur 33 ist ein kartesisches Koordinatensystem dargestellt, in dem das Verdrehmoment einer Torsionsschwingungsdämpfungseinrichtung 1, wie sie in den vorangegangenen Figuren dargestellt ist, in Nm über dem Verdrehwinkel des Torsionsschwingungsdämpfers in Grad aufgetragen ist. Das Verdrehmoment verläuft im Wesentlichen sinusförmig, wobei die Positivamplitude genauso groß ist wie die Negativamplitude.

### Bezugszeichenliste

- 1.: Torsionsschwingungsdämpfer
- 2.: Primärschwungmasse
- 3.: Lager => Gleitlager
- 4.: Sekundärschwungmasse
- 5.: Drehachse
- 6.: Energiespeicher
- 7.: Dämpfungseinrichtung
- 8.: -
- 9.: -
- 10.: -
- 11.: -
- 12.: -
- 13.: -
- 14.: Kammer
- 15.: Bauteil
- 16.: Bauteil
- 17.: Bereich
- 18.: Schrauben
- 19.: Ansatz
- 20.: Anlasserzahnkranz
- 21.: Schwungmasse
- 22.: Abstützbereich
- 23.: Abstützbereich
- 24.: flanschförmiges Ausgangsteil
- 25.: Ausleger
- 26.: radial innere Bereiche
- 27.: Niete
- 28.: -
- 29.: -
- 30.: zweite Energiespeichereinrichtung
- 31.: Energiespeicherelement
- 32.: Energiespeicherelement
- 33.: Energiespeicherelement
- 34.: Energiespeicherelement
- 35.: -
- 36.: Ausleger
- 37.: Schraubendruckfeder
- 38.: Ausnehmung
- 39.: -
- 40.: Anlenkelement
- 41.: Kopf
- 42.: Bund => Führung
- 43.: -
- 44.: Kopplungselement
- 45.: Führungshülse
- 46.: -
- 47.: Fuß
- 48.: -
- 49.: Federführungsdorn
- 50.: Anschlagelement
- 51.: Schraubendruckfeder
- 52.: -
- 53.: -
- 54.: Kopplungshülse
- 55.: Befestigungsflansch
- 56.: Anschlagring
- 57.: -
- 58.: -
- 59.: -
- 60.: Synchronring
- 61.: Synchronringhälfte
- 62.: Synchronringhälfte
- 63.: Tellerfeder
- 64.: Aufnahmebohrung
- 65.: -
- 66.: Anschlagfläche
- 67.: Anschlagfläche
- 68.: -
- 69.: -
- 70.: -
- 71.: Gegenfläche
- 72.: Gegenfläche
- 73.: -
- 74.: Winkel
- 75.: Punkt
- 76.: Punkt
- 77.: Pfeil
- 78.: Länge
- 79.: Pfeil
- 80.: Umfangskraft
- 81.: Doppelpfeil
- 82.: -
- 83.: -
- 84.: -
- 85.: Synchronring
- 86.: Bereich
- 87.: Zunge
- 88.: -
- 89.: -
- 90.: -
- 91.: Schaltelement
- 92.: Klemmring
- 93.: Klemmringhälfte
- 94.: Klemmringhälfte
- 95.: Rolle
- 96.: -
- 97.: ..
- 98.: Innenring
- 99.: Federelement
- 100.: Trennlinie
- 101.: -
- 102.: -
- 103.: -
- 104.: -
- 105.: Energiespeicherelemente
- 106.: Energiespeicherelemente
- 107.: Verdrehwinkel
- 108.: Verdrehwinkel
- 109.: Pfeil
- 110.: Punkt
- 111.: Pfeile
- 112.: -
- 113.: Pfeil
- 114.: Punkte
- 115.: Punkte
- 116.: Rolle
- 117.: -
- 118.: -
- 119.: -
- 120.: -
- 121.: Punkt
- 122.: Punkte
- 123.: -
- 124.: Punkt
- 125.: -
- 126.: Pfeile => Kraftfluss
- 127.: -
- 128.: -
- 129.: -
- 130.: Federelement
- 131.: Federelement
- 132.: -
- 133.: Rolle
- 134.: Punkt
- 135.: Punkt
- 136.: Spiel
- 137.: Spiel
- 138.: Punkte
- 139.: Kraft
- 140.: Pfeile =>Kraftfluss
- 141.: Punkt
- 142.: Punkt
- 143.: Punkt
- 144.: Punkt
- 145.: -
- 146.: Spiel
- 147.: -
- 148.: Auslenkung
- 149.: -
- 150.: Punkt
- 151.: Punkt
- 152.: -
- 153.: -
- 154.: -
- 155.: Punkt
- 156.: -
- 157.: -
- 158.: -
- 159.: -
- 160.: -
- 161.: Kontaktstelle zu 24 und 92
- 162.: Kontaktstelle zu 24 und 91
- 163.: Spiel
- 164.: Pfeil
- 165.: Stellen
- 166.: Stellen
- 167.: -
- 168.: -
- 169.: bis 175. Stellen
- 176.: -
- 177.: -
- 178.: -
- 179.: -
- 180.: zweite Energiespeichereinrichtung
- 181.: Energiespeicherelement
- 182.: -
- 183.: -
- 184.: Anlenkelement
- 185.: Kopf
- 186.: -
- 187.: -
- 188.: Kopplungselement
- 189.: -
- 190.: Schraubendruckfeder
- 191.: -
- 192.: -
- 193.: -
- 194.: Arm von 188
- 195.: -
- 196.: -
- 197.: -
- 198.: -
- 199.: -
- 200.: -
- 201.: dachförmiges Ende
- 202.: -
- 203.: -
- 204.: -
- 205.: -
- 206.: -
- 207.: Energiespeicherelement
- 208.: Energiespeicherelement
- 209.: -
- 210.: zweite Energiespeichereinrichtung
- 211.: -
- 212.: Anlenkelement
- 213.: Kopf
- 214.: -
- 215.: Kopplungselement
- 216.: -
- 217.: -
- 218.: Schraubendruckfeder

## Patentansprüche

1. Torsionsschwingungsdämpfer in Form eines Zweimassenschwungsrades mit einem Eingangsteil (2,17), das drehfest mit der Antriebswelle einer Brennkraftmaschine verbindbar ist, und einem Ausgangsteil (24), das gegen den Widerstand einer ersten Energiespeichereinrichtung (7) und einer zweiten Energiespeichereinrichtung (30;180), die parallel zu der ersten Energiespeichereinrichtung (7) geschaltet ist, relativ zu dem Eingangsteil (2,17) verdrehbar ist, wobei die zweite Energiespeichereinrichtung (30;180) mehrere Energiespeicherelemente (31-34,105,106; 181) umfasst, die an verschiedenen Stellen über den Umfang verteilt an das Ausgangsteil (24) angelenkt sind, wobei das Ausgangsteil (24) als flanschartiges Bauteil ausgebildet ist, das radial außen Ausleger (25) aufweist, die sich radial zwischen den Endbereichen zweier benachbarter Energiespeicher der ersten Energiespeichereinrichtung (7) erstrecken und radial innen über die zweite Energiespeichereinrichtung (30; 180) mit dem Eingangsteil (2; 17) des Torsionsschwingungsdämpfers koppelbar ist, wobei der Verdrehwinkel, bis zu dem die zweite Energiespeichereinrichtung (30; 180) ihre degressive Wirkung entfalten soll (Freiwinkel), 1 bis 10 Grad beträgt und die degressive Wirkung der zweiten Energiespeichereinrichtung (30; 180) so mit der Wirkung der ersten Energiespeichereinrichtung (7) abgestimmt ist, dass die Wirkung der ersten Energiespeichereinrichtung (7) im Freiwinkelbereich nahezu kompensiert wird.

2. Torsionsschwingungsdämpfer nach Anspruch 1, **dadurch gekennzeichnet, dass** die Energiespeicherelemente (31-34,105,106;181) der zweiten Energiespeichereinrichtung (30;180) jeweils mindestens eine Druckfeder (51;190), insbesondere eine Schraubendruckfeder, umfassen.

3. Torsionsschwingungsdämpfungseinrichtung nach Anspruch 2, **dadurch gekennzeichnet, dass** die Energiespeicherelemente (31-34,105,106;181) der zweiten Energiespeichereinrichtung (30;180) jeweils ein Anlenkelement (40;184) umfassen, das mit einem Ende an das Ausgangsteil (24) angelenkt ist.

4. Torsionsschwingungsdämpfungseinrichtung nach Anspruch 3, **dadurch gekennzeichnet, dass** die Energiespeicherelemente (31-34,105,106;181) jeweils ein Kopplungselement (44;188) umfassen, das relativ zu dem Anlenkelement (40;184) gegen die Kraft der Druckfeder (51;190) verschiebbar ist.

5. Torsionsschwingungsdämpfer nach Anspruch 4, **dadurch gekennzeichnet, dass** radial innerhalb des Ausgangsteils (24) eine Kopplungshülse (54) angeordnet ist, die drehfest mit dem Eingangsteil (2; 17) verbunden ist.

6. Torsionsschwingungsdämpfer nach Anspruch 5, **dadurch gekennzeichnet, dass** das, bezogen auf den Torsionsschwingungsdämpfer, radial innere Ende des Kopplungselements (44) durch die Druckfeder (51), in Abhängigkeit vom Verdrehwinkel des Eingangsteils (2,17) relativ zu dem Ausgangsteil (24), unterschiedlich stark gegen die Kopplungshülse (54) gedrückt wird.

7. Torsionsschwingungsdämpfer nach Anspruch 6, **dadurch gekennzeichnet, dass** das, bezogen auf den Torsionsschwingungsdämpfer, radial innere Ende des Kopplungselements (44) in einer Aufnahme (64) aufgenommen ist, die in einem Synchronring (60) vorgesehen ist, der relativ zu der Kopplungshülse (54) und dem Ausgangsteil (24) verdrehbar ist.

8. Torsionsschwingungsdämpfer nach Anspruch 7, **dadurch gekennzeichnet, dass** an dem Synchronring (60) im Bereich der Aufnahme (64) radial außen jeweils zwei Anschläge (66,67) ausgebildet sind, durch die der Verdrehwinkel des Synchronrings (60) relativ zu dem Ausgangsteil (24) und/oder umgekehrt begrenzt wird.

9. Torsionsschwingungsdämpfer nach Anspruch 5, **dadurch gekennzeichnet, dass** das, bezogen auf den Torsionsschwingungsdämpfer, radial innere Ende des Kopplungselements (44) an mindestens einen Klemmring (92) angelenkt ist, der relativ zu dem Ausgangsteil (24) begrenzt verdrehbar ist.

10. Torsionsschwingungsdämpfer nach Anspruch 9, **dadurch gekennzeichnet, dass** zwischen dem Klemmring (92) und einem Laufring (98) Freilaufelemente (95) angeordnet sind, die mit Hilfe eines Schaltrings (91) in Abhängigkeit vom Verdrehwinkel des Eingangsteils (2,17) relativ zu dem Ausgangsteil (24) zwischen dem Klemmring (92) und dem Laufring (98) einklemmbar sind.

11. Torsionsschwingungsdämpfer nach Anspruch 10, **dadurch gekennzeichnet, dass** die Freilaufelemente (95,133) durch Federelemente (131,130) vorgespannt sind, die sich an dem Klemmring (92) abstützen.

## Claims

1. Torsional vibration damper in the form of a two-mass flywheel with an input part (2, 17) which can be connected fixedly to the drive shaft of an internal combustion engine so as to rotate with it, and an output part (24) which can be rotated relative to the input part (2, 17) counter to the resistance of a first energy store device (7) and a second energy store device (30; 180) which is connected in parallel to the first energy store device (7), the second energy store device (30; 180) comprising a plurality of energy store elements (31 to 34, 105, 106; 181) which are articulated on the output part (24) at various points distributed over the circumference, the output part (24) being configured as a flange-like component which has brackets (25) radially on the outside which extend radially between the end regions of two adjacent energy stores of the first energy store device (7), and which output part (24) can be coupled radially on the inside via the second energy store device (30; 180) to the input part (2; 17) of the torsional vibration damper, the rotational angle, up to which the second energy store device (30; 180) is to develop its degressive action (free angle), being from 1 to 10 degrees, and the degressive action of the second energy store device (30; 180) being adapted to the action of the first energy store device (7) in such a way that the action of the first energy store device (7) is approximately compensated for in the free angle range.

2. Torsional vibration damper according to Claim 1, **characterized in that** the energy store elements (31 to 34, 105, 106; 181) of the second energy store device (30; 180) comprise in each case at least one compression spring (51; 190), in particular a compression coil spring.

3. Torsional vibration damping device according to Claim 2, **characterized in that** the energy store elements (31 to 34, 105, 106; 181) of the second energy store device (30; 180) comprise in each case one articulation element (40; 184) which is articulated with one end on the output part (24).

4. Torsional vibration damping device according to Claim 3, **characterized in that** the energy store elements (31 to 34, 105, 106; 181) comprise in each case one coupling element (44; 188) which can be displaced relative to the articulation element (40; 184) counter to the force of the compression spring (51; 190).

5. Torsional vibration damper according to Claim 4, **characterized in that** a coupling sleeve (54) which is connected fixedly to the input part (2; 17) so as to rotate with it is arranged radially within the output part (24).

6. Torsional vibration damper according to Claim 5, **characterized in that** the radially inner (in relation to the torsional vibration damper) end of the coupling element (44) is pressed against the coupling sleeve (54) to a differently pronounced extent by way of the compression spring (51), depending on the rotational angle of the input part (2, 17) relative to the output part (24).

7. Torsional vibration damper according to Claim 6, **characterized in that** the radially inner (in relation to the torsional vibration damper) end of the coupling element (44) is received in a receptacle (64) which is provided in a synchronizer ring (60) which can be rotated relative to the coupling sleeve (54) and the output part (24).

8. Torsional vibration damper according to Claim 7, **characterized in that** in each case two stops (66, 67) are configured radially on the outside of the synchronizer ring (60) in the region of the receptacle (64), by way of which two stops (66, 67) the rotational angle of the synchronizer ring (60) relative to the output part (24) and/or vice versa is limited.

9. Torsional vibration damper according to Claim 5, **characterized in that** the radially inner (in relation to the torsional vibration damper) end of the coupling element (44) is articulated on at least one clamping ring (92) which can be rotated relative to the output part (24) in a limited manner.

10. Torsional vibration damper according to Claim 9, **characterized in that** freewheel elements (95) are arranged between the clamping ring (92) and a running ring (98), which freewheel elements (95) can be clamped in between the clamping ring (92) and the running ring (98) with the aid of a control ring (91) depending on the rotational angle of the input part (2, 17) relative to the output part (24).

11. Torsional vibration damper according to Claim 10, **characterized in that** the freewheel elements (95, 133) are prestressed by way of spring elements (131, 130) which are supported on the clamping ring (92).

## Revendications

1. Amortisseur de vibrations de torsion sous la forme d'un volant d'inertie à deux masses comprenant une partie d'entrée (2, 17) qui peut être connectée de manière solidaire en rotation à l'arbre d'entraînement d'un moteur à combustion interne, et une partie de sortie (24) qui peut tourner par rapport à la partie d'entrée (2, 17) à l'encontre de la résistance d'un premier dispositif accumulateur d'énergie (7) et d'un deuxième dispositif accumulateur d'énergie (30 ; 180) qui est monté parallèlement au premier dispositif accumulateur d'énergie (7), le deuxième dispositif accumulateur d'énergie (30 ; 180) comprenant plusieurs éléments accumulateurs d'énergie (31-34, 105, 106 ; 181) qui sont articulés à la partie de sortie (24) à différents endroits de manière répartie sur la périphérie, la partie de sortie (24) étant réalisée sous forme de composant de type bride qui présente radialement à l'extérieur des bras en porte-à-faux (25) qui s'étendent radialement entre les régions d'extrémité de deux accumulateurs d'énergie du premier dispositif accumulateur d'énergie (7) et qui peut être accouplé radialement à l'intérieur, par le biais du deuxième dispositif accumulateur d'énergie (30 ; 180), à la partie d'entrée (2 ; 17) de l'amortisseur de vibrations de torsion, l'angle de rotation jusqu'auquel le deuxième dispositif accumulateur d'énergie (30 ; 180) doit déployer son effet dégressif (angle de dégagement) étant de 1 à 10 degrés et l'effet dégressif du deuxième dispositif accumulateur d'énergie (30 ; 180) étant adapté à l'effet du premier dispositif accumulateur d'énergie (7) de telle sorte que l'effet du premier dispositif accumulateur d'énergie (7) soit pratiquement compensé dans la plage de l'angle de dégagement.

2. Amortisseur de vibrations de torsion selon la revendication 1, **caractérisé en ce que** les éléments accumulateurs d'énergie (31-34, 105, 106 ; 181) du deuxième dispositif accumulateur d'énergie (30 ; 180) comprennent chacun au moins un ressort de compression (51 ; 190), en particulier un ressort de compression à boudin.

3. Amortisseur de vibrations de torsion selon la revendication 2, **caractérisé en ce que** les éléments accumulateurs d'énergie (31-34, 105, 106 ; 181) du deuxième dispositif accumulateur d'énergie (30 ; 180) comprennent chacun un élément d'articulation (40 ; 184) qui est articulé par une extrémité à la partie de sortie (24).

4. Amortisseur de vibrations de torsion selon la revendication 3, **caractérisé en ce que** les éléments accumulateurs d'énergie (31-34, 105, 106 ; 181) comprennent chacun un élément d'accouplement (44 ; 188) qui peut être déplacé par rapport à l'élément d'articulation (40 ; 184) à l'encontre de la force du ressort de compression (51 ; 190).

5. Amortisseur de vibrations de torsion selon la revendication 4, **caractérisé en ce qu'**une douille d'accouplement (54) est disposée radialement à l'intérieur de la partie de sortie (24), laquelle est connectée de manière solidaire en rotation à la partie d'entrée (2 ; 17).

6. Amortisseur de vibrations de torsion selon la revendication 5, **caractérisé en ce que** l'extrémité radialement interne de l'élément d'accouplement (44) par rapport à l'amortisseur de vibrations de torsion, est comprimée par le ressort de compression (51) différemment fortement contre la douille d'accouplement (54) en fonction de l'angle de rotation de la partie d'entrée (2, 17) par rapport à la partie de sortie (24).

7. Amortisseur de vibrations de torsion selon la revendication 6, **caractérisé en ce que** l'extrémité radialement interne de l'élément d'accouplement (44), par rapport à l'amortisseur de vibrations de torsion, est reçue dans un logement (64) qui est prévu dans une bague de synchronisation (60) qui peut tourner par rapport à la douille d'accouplement (54) et la partie de sortie (24).

8. Amortisseur de vibrations de torsion selon la revendication 7, **caractérisé en ce que** deux butées (66, 67) sont respectivement réalisées radialement à l'extérieur sur la bague de synchronisation (60) dans la région du logement (64), par le biais desquelles l'angle de rotation de la bague de synchronisation (60) est limité par rapport à la partie de sortie (24) et/ou inversement.

9. Amortisseur de vibrations de torsion selon la revendication 5, **caractérisé en ce que** l'extrémité radialement interne de l'élément d'accouplement (44), par rapport à l'amortisseur de vibrations de torsion, est articulée à au moins une bague de serrage (92) qui peut tourner de manière limitée par rapport à la partie de sortie (24).

10. Amortisseur de vibrations de torsion selon la revendication 9, **caractérisé en ce qu'**entre la bague de serrage (92) et une bague de roulement (98) sont disposés des éléments de roue libre (95) qui, à l'aide d'une bague de commutation (91), peuvent être serrés en fonction de l'angle de rotation de la partie d'entrée (2, 17) par rapport à la partie de sortie (24) entre la bague de serrage (92) et la bague de roulement (98).

11. Amortisseur de vibrations de torsion selon la revendication 10, **caractérisé en ce que** les éléments de roue libre (95, 133) sont précontraints par des éléments de ressort (131, 130) qui s'appuient sur la bague de serrage (92).
